# EUROPEAN PATENT SPECIFICATION

(11) **EP 1 475 019 B1**
(45) Date of publication and mention of the grant of the patent: **03.05.2006**
(21) Application number: 03256374.4
(22) Date of filing: 09.10.2003
(51) Int. Cl.: A47J 37/00, A47J 43/00, A47J 44/00

(54) **Bread maker**
Brotbackmaschine
Machine de fabrication de pain

(30) Priority: 07.05.2003 KR 2003029123
(43) Date of publication of application: 10.11.2004
(73) Proprietor: SAMSUNG ELECTRONICS CO., LTD., Suwon-City, Kyungki-do (KR)
(72) Inventor: Park, Jae-ryong, Paldal-ku, Suwon city Kyungki-do (KR); Kwon, Yong-hyun, Suwon city, Kyungki-do (KR); Kim, Chul, Anyang city, Kyungki-do (KR); Lee, Tae-uk, Suwon city, Kyungki-do (KR); Sung, Han-jun, Paldal-ku, Suwon city Kyungki-do (KR); Lee, Jang-woo, Suwon-city, Kyungki-do (KR); Lim, Dong-bin, Paldal-ku, Suwon city Kyungki-do (KR)
(74) Representative: Brandon, Paul Laurence

(56) References cited:
- WO-A-99/25467
- US-A- 5 146 840
- PATENT ABSTRACTS OF JAPAN vol. 014, no. 149 (C-0705), 22 March 1990 (1990-03-22) & JP 02 019114 A (MATSUSHITA ELECTRIC IND CO LTD), 23 January 1990 (1990-01-23)

## Description

The present invention relates to bread makers, and more particularly, though not exclusively, to a bread maker with an improved combination structure between a baking tray and a profile.

Conventionally, a bread maker has been developed so as to allow a user to easily and conveniently make bread, which automatically performs a chain of baking processes. A conventional bread maker typically comprises a main body, an oven accommodated in the main body, a baking tray 2 formed with a profile groove 4 and placed inside the oven, and a profile 6 having a cylindrical shape and combined to the profile groove.

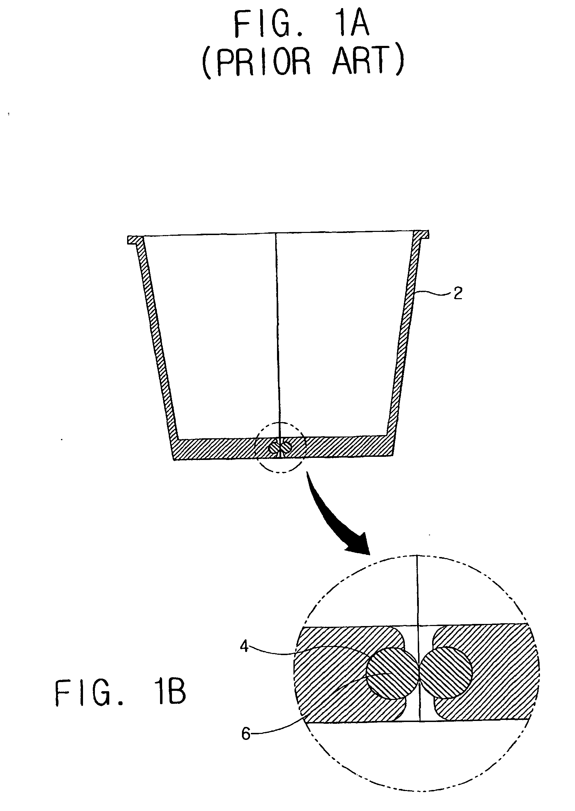

As shown in FIGS. 1A and 1B, in a conventional bread maker, a baking tray is formed with a profile groove 4 having a circular cross-section with an undercut. However, to make the shape of the profile groove 4 by molding is difficult. Therefore, in the conventional bread maker, the baking tray 2 is first molded without the profile groove 4, and then the profile groove 4 is separately formed by machining. Thus, work efficiency and productivity are decreased, so that not only a manufacturing process of the conventional bread maker is delayed but also a cost of the baking tray is increased, thereby making the conventional bread maker less price competitive.

Accordingly, it is an aim of preferred embodiments of the present invention to provide a bread maker having an improved structure of a profile groove formed in a baking tray, so that a profile is securely and compressively supported.

According to the present invention in a first aspect, there is provided a bread maker comprising a main body, an oven accommodated in the main body, a baking tray placed inside the oven and formed with a profile groove, and at least one profile combined in the profile groove of the baking tray, the profile groove of the baking tray having a plurality of breakaway-prevention protrusions formed at edges thereof to prevent the profile from breaking away from the profile groove.

Suitably, the breakaway-prevention protrusions of the profile groove securely support an outer circumference of the profile.

Suitably, the breakaway-prevention protrusions of the profile groove are plurally provided at upper and lower edges of the profile groove.

Suitably, the breakaway-prevention protrusions are formed on the profile groove by press-forming.

Further features of the present invention are set out in the appended claims.

The present invention will become apparent and more readily appreciated from the following description of an embodiment, by way of example only, taken in conjunction with the accompany drawings of which:
FIG. 1A is a sectional view illustrating a combination structure between a baking tray and a profile in a conventional bread maker;
FIG. 1B is a partial sectional view of area A of FIG. 1A.
FIG. 2 is a perspective view of a bread maker according to an embodiment of the present invention;
FIG. 3 is a perspective view of the bread maker of FIG. 2, with a door thereof in an open position;
FIG. 4 is an exploded perspective view of a baking tray and a profile in the bread maker of FIG. 2;
FIG. 5 is a perspective view of the baking tray and the profile of FIG. 4;
FIG. 6A is a sectional views illustrating a combination structure between the baking tray and the profile, taken along line VI-VI in FIG. 5; and
FIG. 6B is a partial sectional view of area B of FIG. 6A.

Reference will now be made in detail to an embodiment of the present invention, examples of which are illustrated in the accompanying drawings, wherein like reference numerals refer to like elements throughout. The embodiment is described below in order to explain the present invention by referring to the figures.

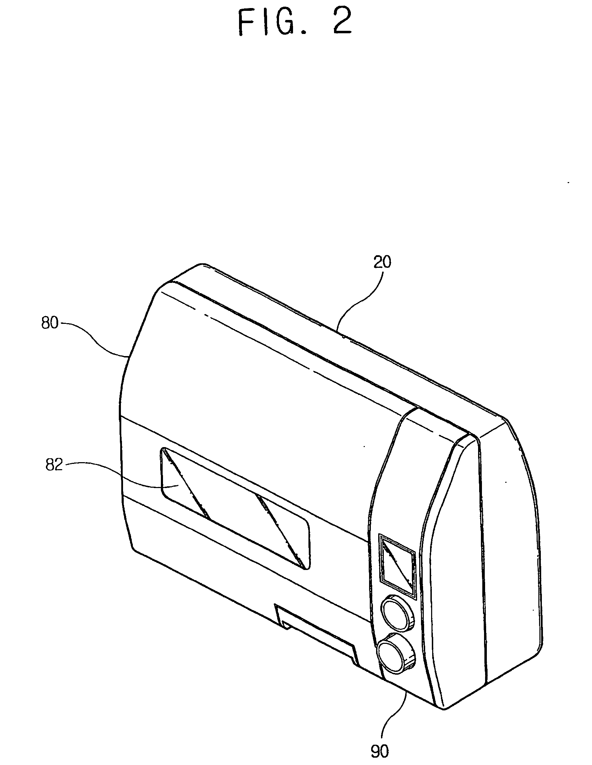

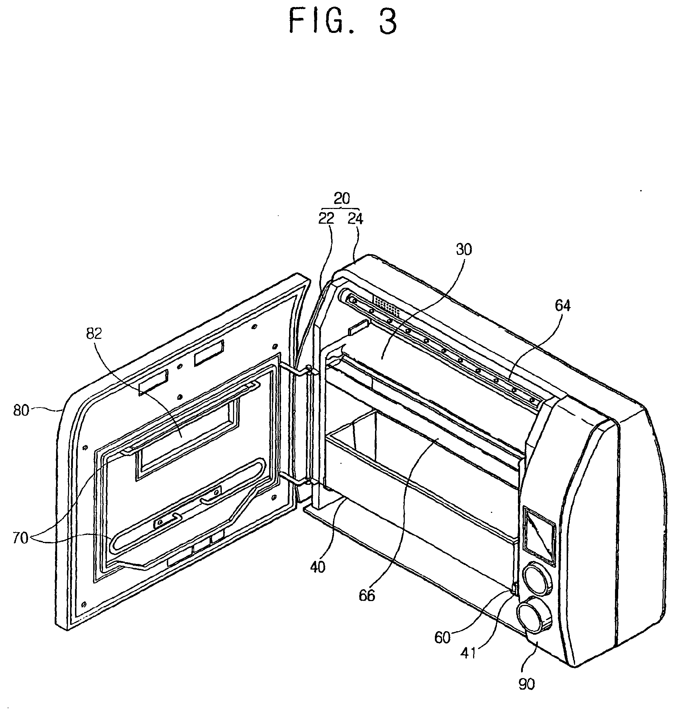

As shown in FIGS. 2 and 3, a bread maker according to an embodiment of the present invention comprises a main body 20, an oven 30 accommodated in the main body 20, a baking tray 40 placed inside the oven 30, a plurality of heaters 70 to heat an inside of the oven 30, and a door 80 provided in a front of the main body 20 so as to open and to close the oven 30.

The main body 20 includes a frame 22 forming an oven compartment in which the oven 30 is accommodated, a frame cover 24 covering an outside of the frame 22, and a control panel 90 provided in a front side of the main body 20 and allowing a user to control the bread maker and to view an operating state of the bread maker.

An upper kneading drum 64 and a lower kneading drum (not shown) are provided at upper and lower sides of the oven 30 such that the upper kneading drum 64 and the lower kneading drum and are disposed in parallel and rotate alternately in clockwise and counterclockwise directions. On the upper kneading drum 64 and the lower kneading drum are wound opposite ends of a mixing bag (not shown) filled with ingredients for bread, respectively. Between the upper kneading drum 64 and the lower kneading drum is provided a pair of dough-blocking members 66 to prevent dough being kneaded in the mixing bag from moving toward the upper kneading drum 64.

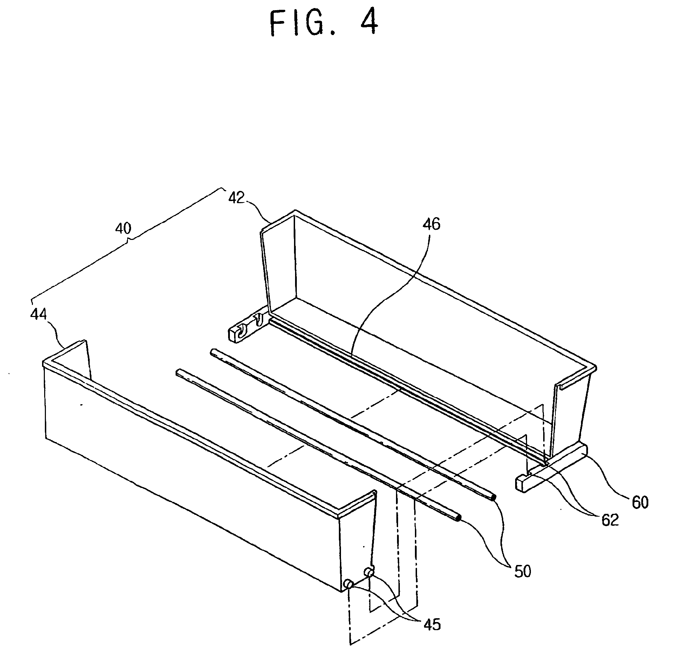

The baking tray 40 is disposed between the upper kneading drum 64 and the lower kneading drum, and is in a box like shape with a top opening to contain completely kneaded dough. Further, the baking tray 40 may be made of aluminum or steel which has a good heat-resisting property. In lower opposite sides of the baking tray 40 are provided tray holders 60, respectively. As shown in FIG. 4, the tray holders 60 are detachably sliding-combined with tray rails 41 (see FIG. 3) provided in inner opposite sides of the oven 30, respectively.

The plurality of heaters 70 are, respectively, disposed in upper and lower parts of the door 80 and in upper and lower parts of the oven 30, thereby heating the inside of the oven 30.

The door 80 is rotatably combined to the main body 20 so as to selectively open and close a front opening of the oven 30.

Further, the door 60 comprises a window glass 82 allowing a user to view the inside of the oven 30 therethrough.

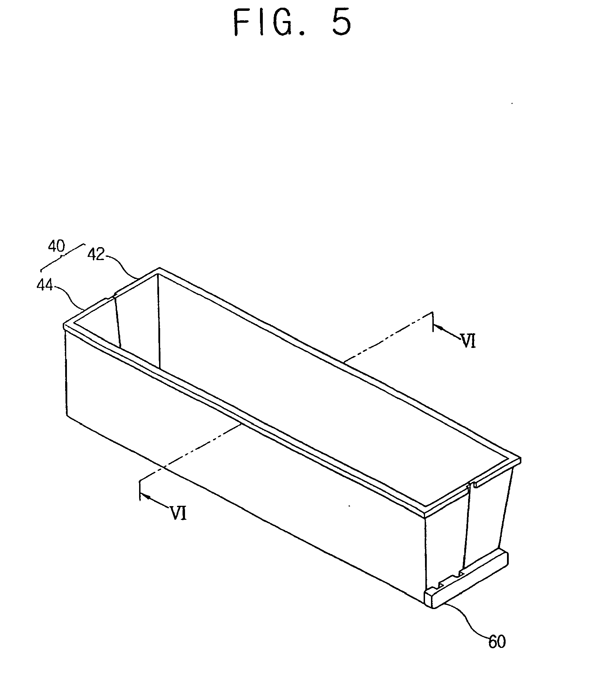

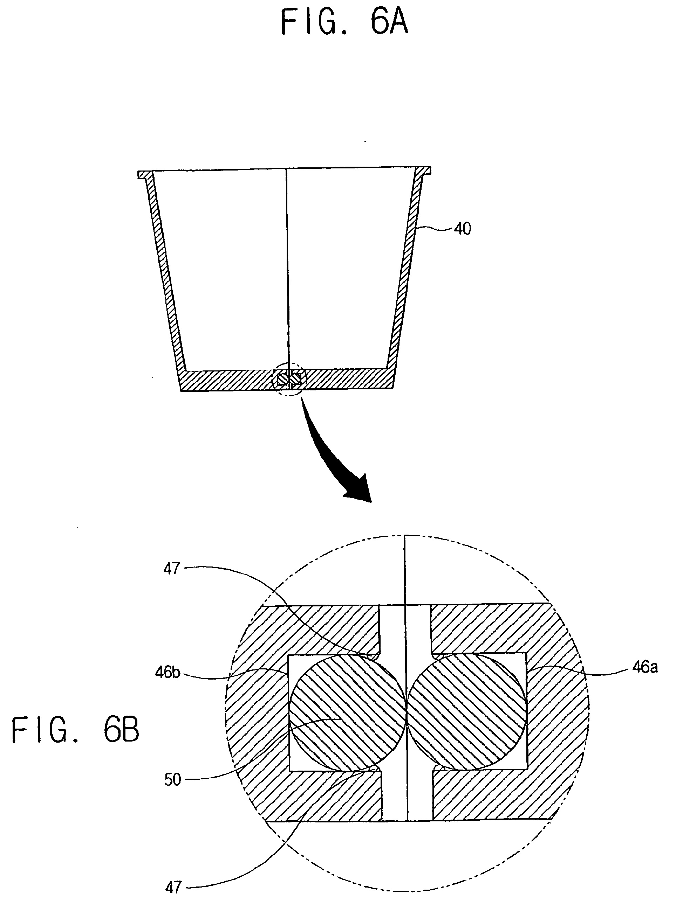

As shown in FIGS. 4 through 6B, the tray 40 comprises a stationary tray 42 having a first profile groove portion 46a provided in a lower section along a lengthwise direction thereof, and a rotatable tray 44 having a second profile groove portion 46b opposite to the first profile groove portion 46a of the stationary tray 42, such that the stationary tray 42 and the rotatable tray 44 are combined to each other to form a box shape with the top opening. The first and second groove portions combine to form a profile groove 46. One or more profiles 50 are compressively fit into a space formed by the first and second profile groove portions 46a and 46b of the stationary and rotatable trays 42 and 44.

In lower opposite sides of the stationary tray 42 are, respectively, provided the tray holders 60 which are used in holding the rotatable tray 44 and allowing the rotatable tray 44 to selectively rotate thereon. In lower opposite sides of the rotatable tray 44 are protruded a plurality of projections 45 to rotatably combine to the tray holders 60.

Each of the tray holders 60 is formed with a plurality of guide grooves 62 corresponding to the plurality of projections 45 of the rotatable tray 44.

The respective first and second profile groove portions 46a and 46b of the stationary and rotatable trays 42 and 44, each have a rectangular cross-section, and are provided with a plurality of breakaway-prevention protrusions 47 securely and compressively supporting partial outer surfaces of the profiles 50 so as to prevent the profiles 50 corresponding to the first and second profile groove portions 46a and 46b from breaking away therefrom.

The breakaway-prevention protrusions 47 are incorporated with the respective stationary and rotatable trays 42 and 44 by molding, and are plurally provided in inner upper and inner lower edges of each of the first and second profile groove portions 46a and 46b. However, the breakaway-prevention protrusions 47 may vary in a placing position, a number, a size, and a shape thereof as necessary within ranges to securely and compressively support each of the profiles 50.

The breakaway-prevention protrusions 47 may be integrally formed on the first and second profile groove portions 46a and 46b by a press.

As is described above, a bread maker including a molded baking tray with a profile groove is provided, so that work efficiency and productivity are increased. Thus, the manufacturing cost of the baking tray is reduced, thereby allowing the bread maker to have an advantage in price competitiveness.

Further, a bread maker in which a profile is effectively prevented from a breakaway from a profile groove is provided.

Although an embodiment of the present invention has been shown and described, it will be appreciated by those skilled in the art that changes may be made in the embodiment without departing from the scope of the invention, which is defined in the appended claims.

## Claims

1. A bread maker, comprising:
a main body (20);
an oven (30) accommodated in the main body (20);
a baking tray (40) placed inside the oven (30) and
formed with a profile groove (46); and
at least one profile (50) combined in the profile groove (46) of the baking tray, **characterised by** the profile groove (46) of the baking tray having a plurality of breakaway-prevention protrusions (47) formed at edges thereof to prevent the profile (50) from breaking away from the profile groove (46).

2. The bread maker according to claim 1, wherein the breakaway-prevention protrusions (47) of the profile groove (46) securely support an outer circumference of the profile (50).

3. The bread maker according to claim 1 or claim 2, wherein the breakaway-prevention protrusions (47) of the profile groove (46) are plurally provided in upper and lower edges of the profile groove (46).

4. The bread maker according to any preceding claim, wherein the breakaway-prevention protrusions (47) are formed on the profile groove (46) by press-forming.

5. The bread maker according to claim 1, wherein each of the profiles (50) is cylindrical in a shape thereof.

6. The bread maker according to claim 1, wherein the baking tray (40) comprises:
a stationary tray (42); and
a moveable tray (44) moveably coupled to the stationary tray (42).

7. The bread maker according to claim6, wherein:
the stationary tray (42) comprises:
a first profile groove portion (46a) provided in a lower section thereof and along a lengthwise direction thereof; and
the moveable tray (44) comprises:
a second profile groove portion (46b) provided opposite to the first profile groove portion (46a) of the stationary tray (42) such that the stationary tray (42) and the moveable tray (44) are combinable to each other.

8. The bread maker according to claim7, wherein the one or more profiles (50) are compressively fit into a space formed by the first and second profile groove portions (46a, 46b).

9. The bread maker according to claim 7 or claim8, wherein the first and second profile groove portions (46a, 46b) of the stationary and moveable trays (42, 44) are provided with the plurality of protrusions (47).

10. The bread maker according to claim 9, wherein the first and second profile groove portions (46a, 46b) have rectangular cross-sections.

11. The bread maker according to claim 9 or claim 10, wherein the plurality of protrusions (47) are a plurality of breakaway-prevention protrusions to securely and compressively support partial outer surfaces of each of the one or more profiles (50) so as to prevent the one or more profiles (50) corresponding to the first and second profile grooves portions (46a, 46b) from breaking away therefrom.

12. The bread maker according to claim 11, wherein the breakaway-prevention protrusions (47) are incorporated with the stationary and moveable trays (42, 44) by molding, and are plurally provided in inner upper and inner lower edges of each of the first and second profile groove portions (46a, 46b).

13. The bread maker according to claim 12, wherein the breakaway-prevention protrusions (47) are integrally formed on the first and second profile groove portions (46a, 46b).

## Patentansprüche

1. Brotbackmaschine, die umfasst:
ein Hauptgehäuse (20);
einen Ofen (30), der in dem Hauptgehäuse (20) aufgenommen ist;
ein Backfach (40), das in den Ofen (30) eingesetzt und mit einer Profilnut (46) versehen ist; und
wenigstens ein Profil (50), das in die Profilnut (46) des Backfachs eingreift, **dadurch gekennzeichnet, dass** die Profilnut (46) des Backfachs eine Vielzahl von Abbrechverhinderungs-Vorsprüngen (47) hat, die an Kanten derselben ausgebildet sind, um zu verhindern, dass das Profil (50) von der Profilnut (46) abbricht.

2. Brotbackmaschine nach Anspruch 1, wobei die Abbrechverhinderungs-Vorsprünge (47) der Profilnut (46) einen Außenumfang des Profils (50) sicher tragen.

3. Brotbackmaschine nach Anspruch 1 oder Anspruch 2, wobei die Abbrechverhinderungs-Vorsprünge (47) der Profilnut (46) mehrfach an einer Ober- und einer Unterkante der Profilnut (46) vorhanden sind.

4. Brotbackmaschine nach einem der vorangehenden Ansprüche, wobei die Abbrechverhinderungs-Vorsprünge (47) durch Pressformen an der Profilnut (46) ausgebildet werden.

5. Brotbackmaschine nach Anspruch 1, wobei jedes der Profile (50) eine zylindrische Form hat.

6. Brotbackmaschine nach Anspruch 1, wobei das Backfach (40) umfasst:
ein stationäres Fach (42); und
ein bewegliches Fach (44), das beweglich mit dem stationären Fach (42) verbunden ist.

7. Brotbackmaschine nach Anspruch 6, wobei:
das stationäre Fach (42) umfasst:
einen ersten Profilnutabschnitt (46a), der in einem unteren Abschnitt derselben und in einer Längsrichtung derselben vorhanden ist; und
das bewegliche Fach (44) umfasst:
einen zweiten Profilnutabschnitt (46b), der gegenüber dem ersten Profilnutabschnitt (46a) des stationären Fachs (42) so vorhanden ist, dass das stationäre Fach (42) und das bewegliche Fach (44) in Eingriff gebracht werden können.

8. Brotbackmaschine nach Anspruch 7, wobei das eine bzw. die mehreren Profile (50) in einen Raum pressgepasst werden, der durch den ersten und den zweiten Profilnutabschnitt (46a, 46b) gebildet wird.

9. Brotbackmaschine nach Anspruch 7 oder Anspruch 8, wobei der erste und der zweite Profilnutabschnitt (46a, 46b) des stationären und des beweglichen Fachs (42, 44) mit der Vielzahl von Vorsprüngen (47) versehen sind.

10. Brotbackmaschine nach Anspruch 9, wobei der erste und der zweite Profilnutabschnitt (46a, 46b) rechteckige Querschnitte haben.

11. Brotbackmaschine nach Anspruch 9 oder Anspruch 10, wobei die Vielzahl von Vorsprüngen (47) eine Vielzahl von Abbrechverhinderungs-Vorsprüngen sind, die Teilaußenflächen jedes des einen bzw. der mehreren Profile (50) sicher und mit Druck tragen, um zu verhindern, dass das eine bzw. die mehreren Profile (50), das/die dem ersten und dem zweiten Profilnutabschnitt (46a, 46b) entsprechen, davon abbrechen.

12. Brotbackmaschine nach Anspruch 11, wobei die Abbrechverhinderungs-Vorsprünge (47) durch Formen in das stationäre und das bewegliche Fach (42, 44) integriert werden und mehrfach an einer inneren Ober- und einer inneren Unterkante des ersten und des zweiten Profilnutabschnitts (46a, 46b) vorhanden sind.

13. Brotbackmaschine nach Anspruch 12, wobei die Abbrechverhinderungs-Vorsprünge (47) integral an dem ersten und dem zweiten Profilnutabschnitt (46a, 46b) ausgebildet sind.

## Revendications

1. Machine à pain, comprenant:
un corps principal (20);
un four (30) logé dans le corps principal (20);
un bac de cuisson (40) disposé à l'intérieur du four (30) et pourvu d'une rainure (46) pour le profilé; et
au moins un profilé (50) inséré dans la rainure (46) pour profilé du bac de cuisson,
**caractérisé en ce que** la rainure (46) pour profilé du bac de cuisson comporte une pluralité de parties saillantes (47) empêchant un dégagement, formées au niveau des bords de la rainure pour empêcher que le profilé (50) ne se dégage de la rainure (46) pour profilé.

2. Machine à pain selon la revendication 1, dans lequel les parties saillantes (47) de la rainure (46) pour profilé, qui empêchent un dégagement, supportent de façon fixe une circonférence extérieure du profilé (50).

3. Machine à pain selon la revendication 1 ou la revendication 2, dans lequel il est prévu une pluralité des parties (47), qui empêchent un dégagement, dans les bords supérieur et inférieur de la rainure (46) pour profilé.

4. Machine à pain selon l'une quelconque des revendications précédentes, dans lequel les parties saillantes (47) empêchant un dégagement sont formées à la presse dans la rainure (46) pour profilé.

5. Machine à pain selon la revendication 1, dans lequel chacun des profilés (50) possède une forme cylindrique.

6. Machine à pain selon la revendication 1, dans lequel le bac de cuisson (40) comprend:
un bac fixe (42);
un bac mobile (44) couplé, de façon mobile, au bac fixe (42).

7. Machine à pain selon la revendication 6, dans lequel:
le bac fixe (42) comprend:
une première partie (46a) de rainure pour profilé, prévue dans une section inférieure du bac et dans la direction longitudinale de ce dernier, et
le bac mobile (44) comprend:
une second partie (46b) de rainure pour profilé, prévue en vis-à-vis de la première partie (46a) de rainure pour profilé du bac fixe (42) de telle sorte que le bac fixe (42) et le bac mobile (44) peuvent être combinés entre eux.

8. Machine à pain selon la revendication 7, dans lequel le profilé ou la pluralité de profilés (50) sont insérés par compression dans un espace formé par les première et seconde parties (46a, 46b) de la rainure pour profilé.

9. Machine à pain selon la revendication 7 ou la revendication 8, dans lequel les première et seconde parties (46a et 46b) de la rainure pour profilé des bacs fixe et mobile (42, 44) sont équipées de la pluralité de parties saillantes (47).

10. Machine à pain selon la revendication 9, dans lequel les première et seconde parties (46a, 46b) de rainure pour profilé possèdent des sections transversales rectangulaires

11. Machine à pain selon la revendication 9 ou la revendication 10, dans lequel la pluralité de parties saillantes (47) sont une pluralité de parties saillantes empêchant un dégagement pour supporter d'une manière fixe et en compression des surfaces extérieures partielles de chacun du profilé ou de la pluralité de profilés (50) afin d'empêcher que le profilé ou la pluralité de profilés (50) correspondant aux première et seconde parties (46a, 46b) de rainure pour profilés ne se dégagent de ces dernières.

12. Machine à pain selon la revendication 11, dans lequel les parties saillantes (47) empêchant un dégagement sont incorporées par moulage dans les bacs fixe et mobile (42, 44) et une pluralité de telles parties saillantes sont prévues dans le bord supérieur intérieur et dans le bord inférieur intérieur de chacune des première et seconde parties (46a, 46b) de rainure pour profilé.

13. Machine à pain selon la revendication 12, dans lequel les parties (47) empêchant un dégagement sont formées d'un seul tenant sur les première et seconde parties (46a, 46b) de la rainure pour profilé.
